# EUROPEAN PATENT APPLICATION

(11) **EP 4 645 827 A1**
(43) Date of publication of application: **05.11.2025**
(21) Application number: 24219573.3
(22) Date of filing: 12.12.2024
(51) Int. Cl.: H04L 67/1008, H04L 67/1012, H04L 67/1029

(54) **INDEPENDENT LOAD BALANCING TO PREVENT NODE AGENT OVERLOAD**

(30) Priority: 02.05.2024 US 202418653220
(71) Applicant: Red Hat, Inc., Raleigh, NC 27601 (US)
(72) Inventor: BONGARTZ, Benedikt, Raleigh, 27601 (US); RUPP, Heiko, Raleigh, 27601 (US)
(74) Representative: Murgitroyd & Company

(57) **Abstract**

In one example, an agent of a first processing node can receive data from a data provider. The agent can determine whether the first processing node has at least a threshold amount of computing capacity. In response to determining that the first processing node has less than the threshold amount of computing capacity, the agent can receive, from a lookup service, a list of one or more processing nodes in the computing cluster that have at least the threshold amount of computing capacity. The agent them can select, from the list, a second processing node that has at least the threshold amount of computing capacity. Having selected the second processing node, the agent can cause the data to be transmitted to a second agent of the second processing node, the second agent being configured to process the data and provide the processed data to a backend server system.

## Description

### TECHNICAL FIELD

The present disclosure relates generally to balancing data processing between processing nodes of a computing cluster. More specifically, but not by way of limitation, this disclosure relates to independent load balancing to prevent node agent overload.

### BACKGROUND

In telemetry gathering, it is common for clients to deliver telemetry data to an agent, which is responsible for processing and forwarding the telemetry data to central servers or various backends. The agent acts as an initial forwarding port where the agent collects and analyzes data, then sends the data to the proper destination. The data processing by the agent typically includes filtering and generating metrics associated with the received telemetry data. Within a given computing environment, multiple processing nodes including multiple agents may be present.

Telemetry data can include distributed tracing data, system logs, and metrics data. More broadly, telemetry data can include any data communicated between sensors and other data generating devices within a computing environment such as a computing cluster or a distributed computing environment. The specific sensor data can range across industries based on the sensors used, with examples of such sensors including kinematics sensors, electrical sensors, health sensors, and so forth.

### SUMMARY OF THE INVENTION

In accordance with a first aspect of the invention, there is provided a method comprising: receiving, by a first agent of a first processing node of a computing cluster, data from a data provider; determining, by the first agent, whether the first processing node has at least a threshold amount of computing capacity; and in response to determining that the first processing node has less than the threshold amount of computing capacity: receiving, by the first agent and from a lookup service, a list of one or more processing nodes in the computing cluster that have at least the threshold amount of computing capacity; selecting, by the first agent and from the list, a second processing node that has at least the threshold amount of computing capacity; and based on selecting the second processing node, causing, by the first agent, the data to be transmitted to a second agent of the second processing node, the second agent being configured to process the data and provide the processed data to a backend server system.

The lookup service may be remote from the first processing node, and wherein the lookup service may be configured to: collect capacity information from a plurality of processing nodes in the computing cluster; receive, from the first agent, details about the data to be processed; generate the list of one or more processing nodes based on the details about the data and the capacity information; and transmit the list to the first agent.

The method of the first aspect may further comprise: selecting the second processing node from the list based on a capacity level of the second processing node and one or more other factors, the one or more other factors including a geographical location associated with the second processing node, a latency associated with the second processing node, a security policy associated with the second processing node, and/or a predefined priority associated with the second processing node.

The threshold amount of computing capacity may be a first threshold amount of computing capacity, and the method may further comprise: in response to determining that the first processing node has less than the threshold amount of computing capacity: determining an amount of resource consumption attributable to the first agent on the first processing node; determining whether the amount of resource consumption meets or exceeds a second threshold; and in response to determining that the amount of resource consumption meets or exceeds the second threshold: identifying the second processing node as a destination for the data; and transmitting the data to the second processing node; or in response to determining that the amount of resource consumption attributable to the first agent is below the second threshold: forgoing transmitting the data to the second processing node; preventing processing of the data by the first agent at least until the first processing node has at least the first threshold amount of computing capacity; and subsequent to the first processing node obtaining at least the first threshold amount of computing capacity, processing the data and providing the processed data to the backend server system.

The method of the first aspect may further comprise: in response to determining that the first processing node has at least the threshold amount of computing capacity, processing the data and providing the processed data to the backend server system.

Causing the data to be transmitted to the second processing node may involve the first agent transmitting the data to the second agent.

The data provider may be a client device that is remote from the first processing node. The data may be telemetry data, and the client device may be an edge device, the edge device being remote from the computing cluster.

Causing the data to be transmitted to the second processing node may include the first agent transmitting a communication to the data provider, the communication indicating that the first processing node has less than the threshold amount of computing capacity and identifying the second processing node as an alternative processing node, the data provider being configured to transmit the data to the second processing node for processing based on the communication.

The method of the first aspect may further comprise: prior to receiving the data from the data provider: receiving a request from the data provider for topology information about the computing cluster; retrieving the topology information from the lookup service, the topology information indicating a set of processing nodes in the computing cluster, the set of processing nodes including the first processing node and the second processing node; and providing the topology information to the data provider, wherein the data provider is configured to select the first processing node based on the topology information and responsively provide the data to the first processing node.

In accordance with a second aspect of the present disclosure, there may be provided a non-transitory computer-readable medium comprising program code for a first agent, the first agent being executable by a processor of a first processing node of a computing cluster, the first agent being executable by the processor to perform the method of the first aspect or any of its optional examples. In accordance with the second aspect of the present disclosure, there is provided a non-transitory computer-readable medium comprising program code for a first agent, the first agent being executable by a processor of a first processing node of a computing cluster, the first agent being executable by the processor to perform operations including: receiving data from a data provider; determining whether the first processing node has at least a threshold amount of computing capacity; and in response to determining that the first processing node has less than the threshold amount of computing capacity: receiving, from a lookup service, a list of one or more processing nodes in the computing cluster that have at least the threshold amount of computing capacity; selecting, from the list, a second processing node that has at least the threshold amount of computing capacity; and based on selecting the second processing node, causing the data to be transmitted to a second agent of the second processing node, the second agent being configured to process the data and provide the processed data to a backend server system.

The data provider may be software executing on the first processing node, the software being separate from the first agent.

The data provider may be a client device that is remote from the first processing node.

The data may be telemetry data, and the client device may be an edge device, the edge device being remote from the computing cluster.

The lookup service may be configured to: collect capacity information from a plurality of processing nodes in the computing cluster; receive, from the first agent, details about the data to be processed; generate the list of one or more processing nodes based on the details about the data and the capacity information; and transmit the list to the first agent.

The operations of the second aspect may further comprise: selecting the second processing node from the list based a capacity level of the second processing node and one or more other factors, the one or more other factors including a geographical location associated with the second processing node, a latency associated with the second processing node, a security policy associated with the second processing node, and/or a predefined priority associated with the second processing node.

The backend server system may be separate from the computing cluster.

The operations of the second aspect may further comprise: in response to determining that the first processing node has at least the threshold amount of computing capacity, processing the data and providing the processed data to the backend server system.

The threshold amount of computing capacity may be a first threshold amount of computing capacity, and wherein the operations may further comprise: in response to determining that the first processing node has less than the threshold amount of computing capacity: determining an amount of resource consumption attributable to the first agent on the first processing node; determining whether the amount of resource consumption meets or exceeds a second threshold; and in response to determining that the amount of resource consumption meets or exceeds the second threshold: identifying the second processing node as a destination for the data; and transmitting the data to the second processing node; or in response to determining that the amount of resource consumption attributable to the first agent is below the second threshold: forgoing transmitting the data to the second processing node; preventing processing of the data by the first agent at least until the first processing node has at least the first threshold amount of computing capacity; and subsequent to the first processing node obtaining at least the first threshold amount of computing capacity, processing the data and providing the processed data to the backend server system.

Causing the data to be transmitted to the second processing node may include the first agent transmitting the data to the second agent.

Causing the data to be transmitted to the second processing node may include the first agent transmitting a communication to the data provider, the communication indicating that the first processing node has less than the threshold amount of computing capacity and identifying the second processing node as an alternative processing node, the data provider being configured to transmit the data to the second processing node for processing based on the communication.

The operations of the second aspect may further comprise, prior to receiving the data from the data provider: receiving a request from the data provider for topology information about the computing cluster; retrieving the topology information from the lookup service, the topology information indicating a set of processing nodes in the computing cluster, the set of processing nodes including the first processing node and the second processing node; and providing the topology information to the data provider, wherein the data provider is configured to select the first processing node based on the topology information and responsively provide the data to the first processing node.

In accordance with a third aspect of the present disclosure, there is provided a first processing node of a computing cluster, the first processing node comprising: a processor; and a memory including program code for a first agent, the first agent being executable by the processor to perform the method of the first aspect or any of its optional examples. In accordance with the third aspect of the present disclosure, there is provided a first processing node of a computing cluster, the first processing node comprising: a processor; and a memory including program code for a first agent, the first agent being executable by the processor to perform operations including: receiving data from a data provider; determining whether the first processing node has at least a threshold amount of computing capacity; and in response to determining that the first processing node has less than the threshold amount of computing capacity: receiving, from a lookup service, a list of one or more processing nodes in the computing cluster that have at least the threshold amount of computing capacity; selecting, from the list, a second processing node that has at least the threshold amount of computing capacity; and based on selecting the second processing node, causing the data to be transmitted to a second agent of the second processing node, the second agent being configured to process the data and provide the processed data to a backend server system.

The lookup service may be remote from the first processing node, and the lookup service may be configured to: collect capacity information from a plurality of processing nodes in the computing cluster; receive, from the first agent, details about the data to be processed; generate the list of one or more processing nodes based on the details about the data and the capacity information; and transmit the list to the first agent.

The operations may further comprise: selecting the second processing node from the list based on a capacity level of the second processing node and one or more other factors, the one or more other factors including a geographical location associated with the second processing node, a latency associated with the second processing node, a security policy associated with the second processing node, and/or a predefined priority associated with the second processing node.

The threshold amount of computing capacity may be a first threshold amount of computing capacity, and the operations may further comprise: in response to determining that the first processing node has less than the threshold amount of computing capacity: determining an amount of resource consumption attributable to the first agent on the first processing node; determining whether the amount of resource consumption meets or exceeds a second threshold; and in response to determining that the amount of resource consumption meets or exceeds the second threshold: identifying the second processing node as a destination for the data; and transmitting the data to the second processing node; or in response to determining that the amount of resource consumption attributable to the first agent is below the second threshold: forgoing transmitting the data to the second processing node; preventing processing of the data by the first agent at least until the first processing node has at least the first threshold amount of computing capacity; and subsequent to the first processing node obtaining at least the first threshold amount of computing capacity, processing the data and providing the processed data to the backend server system.

The operations may further comprise: in response to determining that the first processing node has at least the threshold amount of computing capacity, processing the data and providing the processed data to the backend server system.

Causing the data to be transmitted to the second processing node may involve the first agent transmitting the data to the second agent.

The data provider may be a client device that is remote from the first processing node. The data may be telemetry data, and the client device may be an edge device, the edge device being remote from the computing cluster.

Causing the data to be transmitted to the second processing node may include the first agent transmitting a communication to the data provider, the communication indicating that the first processing node has less than the threshold amount of computing capacity and identifying the second processing node as an alternative processing node, the data provider being configured to transmit the data to the second processing node for processing based on the communication.

The operations may further comprise: prior to receiving the data from the data provider: receiving a request from the data provider for topology information about the computing cluster; retrieving the topology information from the lookup service, the topology information indicating a set of processing nodes in the computing cluster, the set of processing nodes including the first processing node and the second processing node; and providing the topology information to the data provider, wherein the data provider is configured to select the first processing node based on the topology information and responsively provide the data to the first processing node.

### BRIEF DESCRIPTION OF THE DRAWINGS

FIG. 1 is a block diagram of an example of a system for balancing data processing loads between two or more processing nodes according to some aspects of the present disclosure.
FIG. 2 is a flow chart of an example of a process for implementing load balancing to prevent node overload according to some aspects of the present disclosure.
FIG. 3 is a flow chart of an example of a process for transmitting a list to an agent containing details related to one or more processing nodes according to some aspects of the present disclosure.
FIG. 4 is a flow chart of an example of a process for providing topology information indicating a set of processing nodes in a computing cluster to a data provider according to some aspects of the present disclosure.
FIG. 5 is a flow chart of an example of a process for determining whether to transmit data between processing nodes according to some aspects of the present disclosure.
FIG. 6 shows a block diagram of an example of a system for balancing data processing loads between two or more processing nodes according to some aspects of the present disclosure.

### DETAILED DESCRIPTION

A common task for an agent executing on a processing node is to filter data and generate metrics associated with such data. The data received by the agent for instance may comprise logs retrieved from one or more applications. The agent's tasks can consume many of the agent's and processing node's resources including memory, storage, computer processing resources, and time. If the agent is overloaded with too much work in the form of too much data to process, the filtering and metric generation processes can exponentially increase the load handled by the agent and the larger computing architecture to which the agent belongs. If the agent cannot keep up, the agent may experience failures and/or valuable data may be lost.

Some examples of the present disclosure can overcome one or more of the abovementioned problems by using a combination of tools and agent protocols to balance load distributions between two or more processing nodes and agents within the processing nodes, thereby preventing overload on any single processing node. As an example, a first agent may be a software program that is programmed to be executable by a processor to perform a collection of steps. The steps can include receiving data from a data provider. The agent may then determine whether the first processing node has at least a threshold amount of computing capacity. If not, the agent can receive, from a lookup service, a list of one or more processing nodes in the computing cluster that have at least the threshold amount of computing capacity. The agent them can select, from the list, a second processing node that has at least the threshold amount of computing capacity. Based on having selected the second processing node, the agent can cause the data to be transmitted to a second agent of the second processing node. The second agent can be configured to process the data and provide the processed data to a backend server system.

In some examples, after determining that it has insufficient capacity to process the data, the first agent may itself transmit the data to the second processing node. In other examples, the first agent may notify the data provider that the first processing node has insufficient capacity to process the data, at which point the data provider can select an alternative node to which to transmit the data for processing. For example, the first agent may communicate with a lookup service to retrieve topology information about the computing cluster in which the processing nodes are operating. The topology information can indicate a set of processing nodes in the computing cluster that may have sufficient capacity to process the data. The first agent may then provide the topology information to the data provider, which can select the alternative processing node based on the topology information. After selecting the alternative processing node, the first agent can provide the data to the alternative processing node for handling.

These illustrative examples are given to introduce the reader to the general subject matter discussed here and are not intended to limit the scope of the disclosed concepts. The following sections describe various additional features and examples with reference to the drawings in which like numerals indicate like elements but, like the illustrative examples, should not be used to limit the present disclosure.

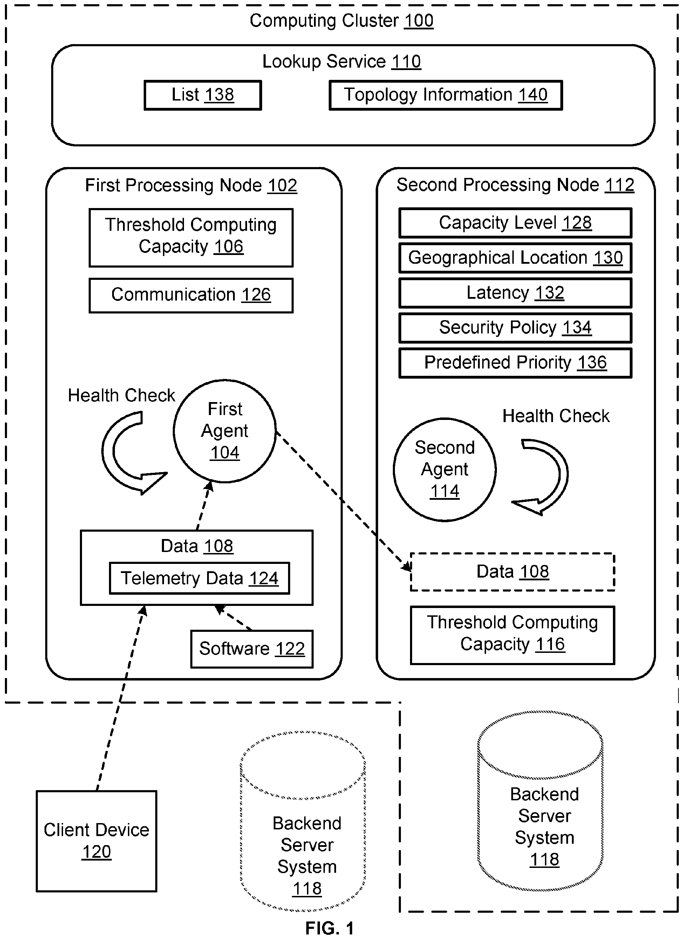

FIG. 1 shows a block diagram of an example of a system for balancing data processing loads between two or more processing nodes according to some aspects of the present disclosure. The system includes a computing cluster 100 with a first processing node 102, a second processing node 112, a lookup service 110, and a backend server system 118. The processing nodes 102, 112 may be physical machines or virtual machines. In some examples, the computing cluster 100 may include more or fewer components. For instance, the lookup service 110 may operate external to the computing cluster 100 but communicate over a network with the computing cluster. Likewise, the backend server system 118 may be external to the computing cluster 100 in some examples, as represented by the dashed cylinder. Although two processing nodes 102 and 112 are shown in the computing cluster 100, it will be appreciated that any number of processing nodes may be present within the computing cluster 100.

The first processing node 102 includes a first agent 104 which can process data 108 received at the first processing node 102. The first processing node 102 can receive the data 108 from a data provider. Examples of the data provider can include software 122 executing on the first processing node 102, a client device 120, a database, or another data source. The client device 120 may be internal or external to the computing cluster 100. Examples of the client device 120 may include a laptop computer, desktop, computer, tablet, e-reader, or wearable device. The client device 120 may be an edge device, in some examples.

The data 108 can include telemetry data such as metrics, logs, and traces. Additionally or alternatively, the data 108 can be operational data or data obtained by one or more sensors. There can be many types of sensors that can provide the data. For example, a variety of sensors placed on a plurality of car components may generate data, with each sensor transmitting the data to the first processing node 102 where, by default, the data 108 is initially processed by the first agent 104. In another example, sensors related medical diagnostics may provide the data 108. The types of sensors that generate data can include sensors used in a variety of industries including the automotive, chemical manufacturing, electrical manufacturing, healthcare, optics in addition to more general telemetric data processing applications.

The first agent 104 is local to the first processing node 102 and can process and forward data 108 received at the first processing node 102 to servers such as the backend server system 118, which may be internal or external to the cluster 100. The first agent 104 may process data 108 in a variety of ways. Processing data may include filtering the data, enhancing the data, generating metrics and metadata based on the data, or otherwise modifying the data 108. The first agent 104, and any other agent within the computing cluster 100 such as the second agent 114, can aggregate data 108 from data sources continuously, in periodic intervals, or in response to triggering conditions from the data source.

The first processing node 102 can have a threshold amount of computing capacity 106. The threshold amount of computing capacity 106 may be static or dynamic, in that it can change over time. The threshold amount of computing capacity 106 may be defined by a user, an operating system, intermediate software, etc. The threshold amount of computing capacity 106 may define a minimum amount of resources that must be available to the first agent 104 or the first processing node 102 (as a whole) for the first agent 104 to be allowed to process the data 108. For instance, the threshold amount of computing capacity 106 may be minimum amount of CPU, data storage, memory, or energy that must be available on the first processing node 102 for the first agent 104 to be allowed to handle the data 108. In some examples, the threshold amount of computing capacity 106 may be user configured as a percentage. For instance, a user may define the threshold amount of computing capacity 106 as at least 25% of the first processing node's CPU and memory must be available at given point in time for the first agent 104 to be allowed to handle the data 108. The threshold amount of computing capacity 106 of the first processing node 102 may depend on the hardware capabilities of the first processing node 102. If the first agent 104 or the first processing node 102 (e.g., as a whole) does not have at least the threshold amount of computing capacity 106 available, then the first agent 104 may determine that it is not to process the data 108. In that event, the first agent 104 may help facilitate the processing of the data 108 elsewhere.

The first agent 104 or the first processing node 102 can monitor the first processing node 102 to determine whether the first processing node 102 has less than the threshold amount of computing capacity 106. Monitoring may be performed by periodic introspection of the first processing node 102 to determine the usage level of its various resources. Irregular sampling techniques may also be used to compare the available resources of the first processing node 102 against the threshold amount of computing capacity 106. For instance, the first agent 104 may determine the computing resources available at the first processing node 102 in random intervals.

In some examples, the agents on the processing nodes can periodically share their current resource consumption with a lookup service 110. For example, the lookup service 110 can request capacity data from each processing node within the computing cluster 100 at regular intervals or in response to detecting events. The capacity data can indicate the resource usage and/or resource availability at each processing node. The lookup service 110 can collect this capacity data and use it as a basis to help the first agent 104 or other components determine where to forward the data 108, for instance if the first processing node 102 has insufficient capacity to process the data 108 (e.g., the available resources on the first processing node 102 are below the threshold amount of computing capacity 106). The lookup service 110 can also maintain topology information 140, which may indicate the arrangement of nodes in the computing cluster 100 and/or their available capacities.

In some examples, the first agent 104 may dynamically adjust the threshold amount of computing capacity 106 based on one or more factors, such as the availability of other processing nodes within the computing cluster 100. In some examples, the first agent 104 can retrieve the topology information 140 from the lookup service 110 and self-regulate its threshold amount of computing capacity 106 depending on the relative availability of additional processing nodes such as the second processing node 112. For instance, if the lookup service 110 determines that additional processing nodes have come online within the computing cluster 100, the lookup service 110 may update the list 138 provided to the first agent 104. Based on the number or types of processing nodes on the list 138, the first agent 104 may adjust its threshold amount of computing capacity 106, e.g., defined from 25% of the first processing node's 102 CPU and memory to 20%, to provide for greater tolerance from an overload condition.

In some examples, the first agent 104 may communicate with agents of other processing nodes, such as the second agent 114 of the second processing node 112. The first agent can indicate its threshold amount of computing capacity 106, and the volume of data 108 being received from a data provider, to the second agent 114. In response, the second agent 114 can communicate to the second processing node 112 to adjust its threshold amount of computing capacity. In this way, the agents may work together to dynamically adjust their thresholds depending on the state of the computing cluster 100 and/or the volume of data being received.

If the first agent 104 determines that the first processing node 102 has less than the threshold amount of computing capacity 106 available, the first agent 104 can request the list 138 from the lookup service 110. In response to the request, the lookup service 110 can provide the list 138. The list 138 can identify one or more processing nodes in the computing cluster 100 that have at least the threshold amount of computing capacity available. In the example of FIG. 1, only the first processing node 102 and the second processing node 112 are shown within the computing cluster 100. However, it will be appreciated that the computing cluster 100 may include any number of processing nodes, which may or may not have at least the threshold amount of computing capacity available in any particular moment. List 138 can be periodically updated by the lookup service 110 to track each of the processing nodes and their computing capacity at any given moment.

The lookup service 110 may further also track trends in processing node computing capacity as well as processing node data intake trends. For instance, the lookup service 110 may note that periodic operations of a data input sensor generate significant volumes of data received by a specific processing node within the computing cluster 100. In response, the lookup service 110 can store in the list 138 expected periods in which a processing node is likely to receive an influx of data or cross a threshold amount of computing capacity 106. The lookup service 110 can notify the first agent 104 to avoid transmitting data 108 to the specific processing node, even if that processing node has not yet reached its threshold amount of computing capacity, to avoid a possible bottleneck.

In some examples, to track trends in processing node computing capacity, the first agent 104 may generate metadata about incoming data (e.g., data 108) received from the data provider. For instance, the first agent 104 may track the rate at which data is received from the data provider and store that information as metadata. The metadata may be used by the first agent 104 or lookup service 110 to predict specific periods in which the first agent 104 is likely to enter a forwarding mode. The prediction may be made by comparing the current state of the first agent 104 with the metadata recorded at the moment the first agent 104 had previously entered forwarding mode. The predicted period in which the first agent 104 is likely to enter the forwarding mode may be communicated back to the lookup service 110, or to other agents within the computing cluster 100.

For load optimization purposes, the list 138 may be ranked based on a variety of factors relative to the first agent 104. For instance, the one or more additional processing nodes within the list 138 may be ranked based on location relative to the first agent 104, with processing nodes closer to the first agent 104 given priority, all other factors equal. This is because transmitting data to nodes that are geographically closer may result in lower latency than transmitting data to nodes that are geographically farther. Similarly, the processing nodes may be ranked based on latency, available memory, and available disk space, among other factors.

While in the above example the lookup service 110 ranked the available nodes on the list 138, in other examples the first agent 104 may perform the ranking. For instance, the first processing node 102 can receive the list 138 from the lookup service 110. The list 138 may be an unranked list of other processing nodes in the computing cluster 100 that have sufficient capacity to process the data 108. Then, the first agent 104 may rank each of the processing nodes based on the node's corresponding information included in the list 138. For instance, the list 138 may contain data related to the location of each of the processing nodes, their threshold amount of computing capacity, their current status, their latency, available memory, disk space, or any other metrics. Using the list 138, the first agent 104 may then prioritize the processing nodes and select the second processing node 112 as the destination for the data 108. The first agent 104 can communicate its prioritization list back to the lookup service 110, or other agents within the computing cluster, which may help expedite the process in the future by avoiding repetition of the prioritization process. In some examples, each agent on each processing node may have its own prioritization scheme based on various factors that are most relevant to that agent, which can allow for a greater level of customization than may otherwise be possible.

The lookup service 110, in making the list 138, may periodically communicate with each of the one or more processing nodes within the computing cluster 100, including the first processing node 102 and the second processing node 112. Alternatively, agents on each of the processing nodes, including the first agent 104 and the second agent 114 may periodically communicate to the lookup service 110 or to other agents the status of their respective processing nodes. In some examples, the processing nodes may only communicate their status back to the lookup service when their threshold amount of computing capacity is reached - e.g., to indicate that they have exceeded the threshold. This may reduce the amount communications and thereby reduce bandwidth consumption. In some examples, the agents may communicate to the lookup service 110 that they are experiencing a certain level of activity, indicating their ability to take on additional data processing capabilities from other agents. This information can then be used by the lookup service 110 to decide which processing nodes to include in the list when it is requested by an agent.

In FIG. 1, the second processing node 112 is shown as having a threshold amount of computing capacity 116. The threshold amount of computing capacity 116 may be the same as or different from the threshold amount of computing capacity 106, given that different processing nodes may have different hardware and thus different capabilities. If the list 138 identifies the second processing node 112, the first agent 104 can select the second processing node 112 as a possible destination for the data 108. In some examples, the first agent 104 and second agent 114 may then further communicate with one another, before the data 108 is forwarded from the first agent 104 to the second agent 114, for example to confirm that the second processing node 112 does in fact have sufficient capacity at that instant in time to handle the data 108. If the second agent 114 confirms that the second processing node 112 does in fact have sufficient capacity at that instant in time to handle the data 108, the first agent 104 may select the second processing node 112 as the destination. Otherwise, the first agent 104 may select another processing node on the list 138 as a possible destination and repeat this process, until a final destination is found.

The second processing node 112 can have various characteristics, such as a current capacity level 128, a geographical location 130, a current level of latency 132, a security policy 134, and a predefined priority 136. Information about these characteristics may be retrieved by the lookup service 110 to be stored in list 138 or as topology information 140. In some examples, the second processing node 112 may communicate these characteristics to other processing nodes within the computing cluster 100. While not shown for simplicity, it will be appreciated that each processing node, including the first processing node 102, can have its own set of characteristics similar to those described above that can be retrieved by the lookup service 110 and shared with other processing nodes. Some or all of these characteristics can be used by the first agent 104 to determine where to forward the data 108.

If the first agent 104 selects the second processing node 112 as the destination for the data 108, the first agent 104 can cause the data 108 to be transmitted to the second agent 114 of the second processing node 112. For example, the first agent 104 can itself transmit the data 108 to the second agent 114. Alternatively, the first agent 104 can notify the data provider that it should transmit the data 108 to the second agent 114. Either way, the second agent 114 can receive and process the data 108. The second agent 114 may then provide the processed data to the backend server system 118. The backend server system 118 may include one or more servers that may be configured to perform further functionality based on the processed data.

In some examples, the first agent 104 may enter a forwarding mode and forward incoming data to the second processing node 112 and/or one or more other processing modes until a condition is satisfied. An example of the condition may be the first processing node 102 having at least its threshold amount of computing capacity 106 available. Another example of the condition may be the second processing node 112 and/or other processing nodes signaling that they are overloaded (e.g., they have fallen below their respective thresholds). While in the forwarding mode, the first agent 104 may continue to perform status health checks on itself to detect when its capacity is back above the threshold amount of computing capacity 106, at which point the first agent 104 may switch to a data processing mode in which it resumes the processing of incoming data. The first agent 104 can automatically and dynamically switch back-and-forth between these two modes depending on its available resources.

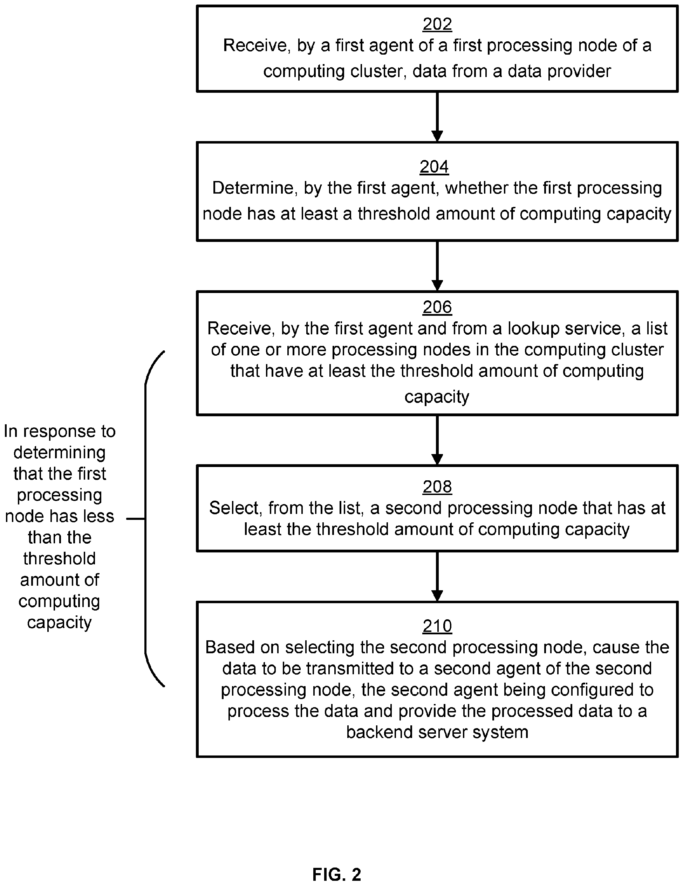

FIG. 2 is a flow chart of an example of a process for implementing load balancing to prevent node overload according to some aspects of the present disclosure.
Other examples may include more operations, fewer operations, different operations, or a different order of the operations shown in FIG. 2. The operations of FIG. 2 will now be described with respect to the components of FIG. 1.

In block 202, a first agent 104 of a first processing node 102 of a computing cluster 100 receives data 108 from a data provider. The data provider can be internal or external to the computing cluster 100. For instance, the data provider can be software 122 executing in the computing cluster 100. The data provider can transmit any variety of data 108 to the first agent 104. For instance, the data provider may provide data 108 from one or more sensors internal or external to the computing cluster 100. The data provider may be edge or client devices 120. The data provider can include multiple data providers. For instance, the data provider may include a group of sensors or multiple databases.

In block 204, the first agent 104 determines whether the first processing node 102 has at least a threshold amount of computing capacity 106. To make the determination, the first agent 104 may interact with an operating system of the first processing node 102 to collect usage metrics related to various resources of the first processing node 102. This process of collecting one or more resource usage metrics at a given instant in time may be referred to herein as "sampling." Sampling may be performed periodically or aperiodically. In some examples, a user may configure the first agent 104 to perform the sampling in addition to defining the threshold amount of computing capacity 106. For instance, a user may set a less frequent periodic sampling, or an infrequent periodic sampling after determining that the first agent rarely exceeds the threshold amount of computing capacity 106. In block 206, the first agent 104 receives, from the lookup service 110, a list 138 of one or more processing nodes in the computing cluster 100 that have at least the threshold amount of computing capacity. In some examples, the list 138 may include any number of processing nodes in the computing cluster 100 that have a sufficient amount of computing capacity available to allow them to process the data 108. For instance, the first agent 104 can provide information about the data 108 such as its size to the lookup service 110, which can populate the list 138 based on such information and the available capacities of the processing nodes.

In some examples, the lookup service 110 can exclude from the list 138 any processing nodes that are close to the threshold (e.g., within 5% of the threshold), or have historic performance metrics that indicate that the processing node is likely to subsequently fall under the threshold, to prevent the processing node from becoming overloaded by the data 108.

In block 208, the first agent 104 selects from the list 138 a second processing node 112 that has at least the threshold amount of computing capacity 116. The first agent 104 may select the second processing node 112 based on its current capacity level 128 (e.g., the amount of resources it has available). Additionally or alternatively, the first agent 104 may select the second processing node 112 based on one or more other factors, such as a geographical location 130, latency 132, a security policy 134 associated with the second processing node 112, or a predefined priority 136 in a hierarchy. The predefined priority 136 may be configured by a user. In addition, or alternatively, the predefined priority 136 may be based historical performances of the first processing node 102, the second processing node 112, or any other processing node indicated on the list 138.

In some examples, the second processing node 112 can serve as a conduit for the list 138. For example, if the first processing node 102 loses a connection to the lookup service 110, the first processing node 102 can transmit a request for the list 138 to the second processing node 112 (e.g., the second agent 114), which can retrieve the list 138 from the lookup service 110 and provide it to the first agent 104. Similarly, the second processing node 112 can serve as a conduit for the topology information 140, for example by providing the topology information 140 from the lookup service 110 to the first agent 104 at the request of the first agent 104. In some examples, the second processing node 112 can provide data about additional processing nodes that are not on the list 138 to the first agent 104 (e.g., at the request of the first agent 104), which may be helpful in situations where the lookup service 110 has incomplete information.

In block 210, based on selecting the second processing node 112, the first agent 104 may cause the data 108 to be transmitted to a second agent 114 of the second processing node 112. The second agent 114 may process the data 108 and provide the processed data 108 to a backend server system 118. Additionally or alternatively, the second agent 114 may further transmit the data 108 to a third agent belonging to a third processing node. For instance, the second processing node 112 may process some of the data and transmit a remainder to the third processing node. As another example, the second agent 114 may determine that the second processing node 112 has fallen below the threshold amount of computing capacity 116 and, thus, it may not be allowed to process the data 108. To help prevent the data 108 delays in processing the data 108, the second processing node 112 can transmit the data 108 to a third processing node for handling. The third processing node can conduct a similar evaluation and may pass the data 108 to a fourth processing node, and so on, until a node capable of processing the data 108 is reached.

In some examples, certain processing nodes may be better at handling certain kinds of data than other processing nodes. For instance, the second processing node 112 may be configured to process specific forms of data 108, such as telemetry data 124 consisting of log data, while a third processing node may be configured to process another form of data 108 such as graphics data. Based on the type of the data 108 and the capabilities of the processing nodes on the list 138, the first agent 104 may cause at least a subset of the data 108 to be transmitted to a processing node that is particularly suited to process that type of data. For instance, the list 138 may indicate that the second processing node 112 has a larger GPU compared to other processing nodes within the computing cluster. So, the first agent 104 may prioritize transmitting graphical data to the second processing node 112 over other processing nodes within the computing cluster 100, even if the second processing node 112 has less available capacity than the other processing nodes.

The first agent 104 may detect the strength of the connection between the first agent 104 and the second agent 114, for example prior to or during the transmission of the data 108. If the second processing node 112 goes offline or the connection is otherwise severed, or the first agent 104 determines that the second agent 114 failed to receive some or all of the data 108 for another reason, the first agent 104 can implement a remedial action. For example, the first agent 104 can select an alternative processing node from the list 138 to which to transmit the data 108.

In some examples, the second agent 114 of the second processing node 112 may also detect the strength of the connection between the second processing node 112 and the first processing node 102 (e.g., while the second agent 114 is receiving data 108 from the first agent 104). If the second agent 114 detects that the first agent 104 has gone offline, for instance due to excessive overload, or that the data transmission did not successfully complete for another reason, the second agent 114 may communicate with the lookup service 110 or other available agents within the computing cluster 100 to indicate that the first processing node 102 is offline. The second agent 114 may also communicate with the data provider (e.g., client device 120) to notify the data provider that the first agent 104 is unreachable and redirect the flow of data 108 to the second processing node 112 or to any other available processing node within the computing cluster 100.

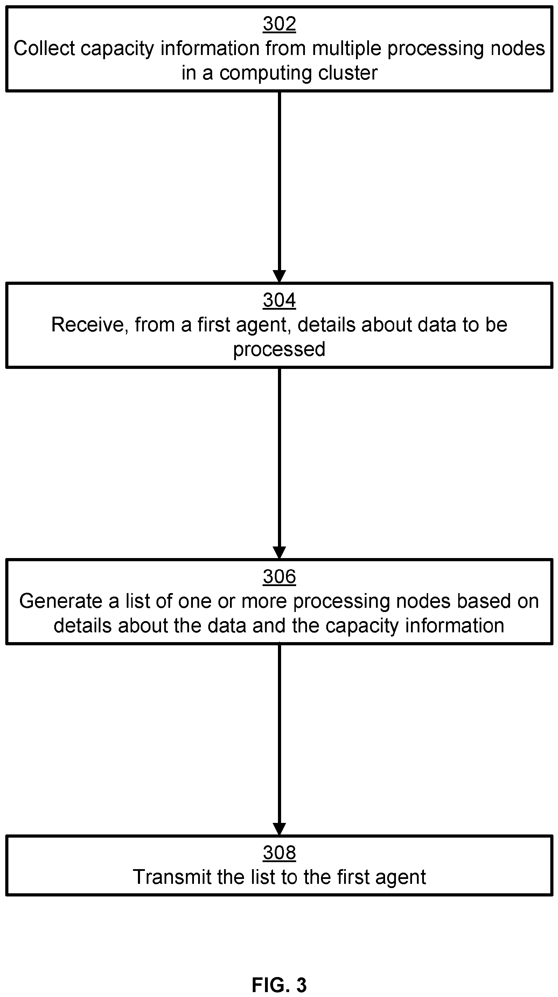

FIG. 3 is a flow chart of an example of a process for transmitting a list to an agent containing details related to one or more processing nodes according to some aspects of the present disclosure.. Other examples may include more operations, fewer operations, different operations, or a different order of the operations shown in FIG. 3. The operations of FIG. 3 will now be described with respect to the components of FIG. 1.

In block 302, the lookup service 110 collects capacity information from multiple processing nodes in a computing cluster 100. The multiple processing nodes can include, for instance, the first processing node 102 and the second processing node 112. Capacity information may indicate the current capacity of the processing nodes to process additional data. In some examples, the capacity information may indicate the current resource consumption at each of the processing nodes - e.g., the current processing, memory, and storage consumption. In some examples, the capacity information can indicate whether each of the processing nodes is under, at, or above its threshold amount of computing capacity, and the extent to which it is under, at, or above its threshold amount of computing capacities. Other capacity information can include the type of data 108 being received at each processing node and the data velocity of the data 108 being received at each of the processing nodes, each nodes' historic performance over a specific time period, or other trends related to resource consumption at each of the processing nodes.

In block 304, the lookup service 110 receives, from the first agent 104, details about data 108 to be processed. The details can include the size of the data 108, the divisibility of the data 108, the originating location of the data 108, the type of data 108, or any other information describing the data 108. For instance, details about the data 108 sent by the first agent 104 may indicate that the data 108 comprises a divisible dataset of log files being sent from a software program. As another example, details about the data 108 sent to the first agent 104 may indicate that the data 108 is a stream of temperature data being received from a sensor that is part of a class of vehicle related sensors.

The details about the data 108 may suggest that certain processing nodes within the computing cluster are better equipped to process the data. For instance, if the data 108 is graphics data, the first agent 104 may preferentially transmit the graphics data to a specific processing node containing a more-advanced graphical processing unit and more RAM storage. In another example, the data may comprise log files. In such cases, the first agent 104 may recognize no preference in forwarding such data in overflow cases to any particular processing node.

In block 306, the lookup service 110 generates a list 138 of one or more processing nodes based on details about the data 108 and the capacity information. For instance, details about the data 108 may indicate that the data 108 is sufficiently large to exceed the threshold amount of computing capacity of any given processing node of the computing cluster 100, but that the data 108 is divisible into discrete subsets of data, where the subsets may be dispersed to one or more processing nodes without exceeding the respective nodes' threshold amount of computing capacities. Additionally or alternatively, the details about the data 108 may indicate that only a limited number of processing nodes are capable of processing the data 108 without exceeding the processing node threshold amount of computing capacity. The generated list 138 may rank the processing nodes based on their threshold amount of computing capacity, or their capability of handling specific data. The lookup service 110 can also populate the list 138 with additional information about the chosen nodes, such as their geographical locations, latencies, security policies, and predefined priorities, etc. This additional information may help the first agent 104 choose among the processing nodes on the list 138.

In block 308, the lookup service 110 transmits the list 138 to the first agent 104. In some examples, the list 138 may be transmitted to both the first agent 104 and one or more additional agents such as the second agent 114. The lookup service 110 may be configured to periodically perform some or all of steps 302-308. In some examples, the first agent 104 can share the list 138 with other processing nodes. For example, after the list 138 is transmitted to the first agent 104, the first agent 104 may further transmit the list 138 to one or more other agents within the computing cluster 100. That way, the other agents may not need to request the list themselves from the lookup service 110 when they receive data, which can reduce latency.

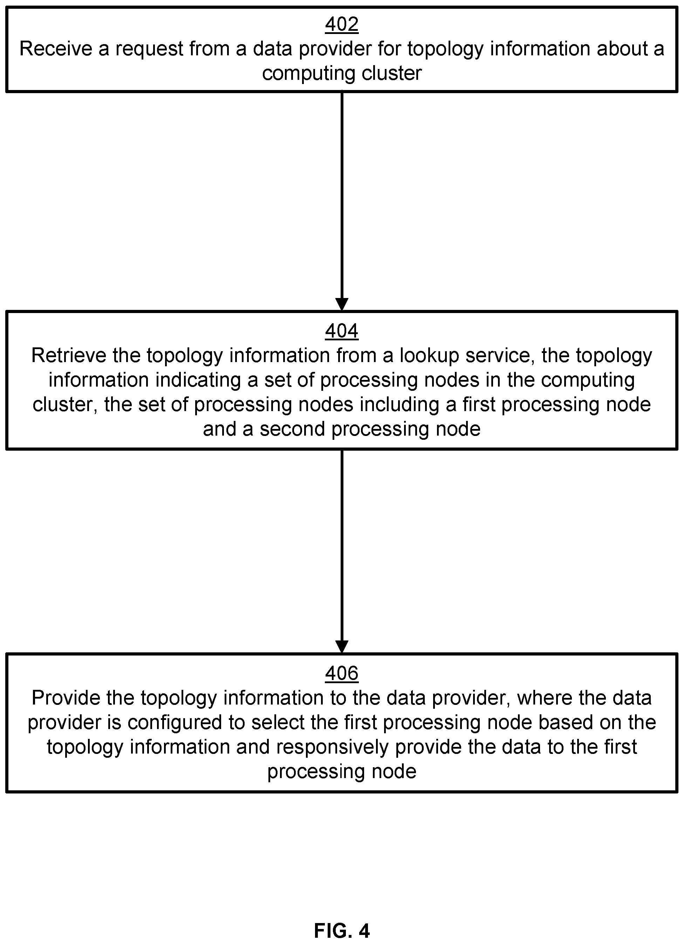

FIG. 4 is a flow chart of an example of a process for providing topology information indicating a set of processing nodes in a computing cluster to a data provider according to some aspects of the present disclosure. Other examples may include more operations, fewer operations, different operations, or a different order of the operations shown in FIG. 4. The operations of FIG. 4 will now be described with respect to the components of FIG. 1.

In block 402, the first agent 104 receives a request from a data provider for topology information 140 about a computing cluster 100. The topology information 140 may provide information about the number, configuration, types, and/or capacities of processing nodes in the computing cluster 100. In some examples, the topology information 140 may include similar information to list 138. The request sent from the data provider may be triggered by an indication from the first agent 104 that the first processing node 102 is at, near, or approaching the threshold amount of computing capacity 106. For instance, the first agent 104 may signal to the data provider that it either no longer has sufficient capacity to handle incoming data or it will not have sufficient capacity to handle incoming data in the near future. In response, the data provider can request the topology information 140 from the first agent 104, since the data provider may not be able to access the lookup service 110 (e.g., for security reasons). As another example, the data provider may send in the request in response to detecting a change in its status, for instance, if the data provider is suddenly generating a high volume of data 108. In other approaches, the data provider may submit the request to the first agent 104 based on a periodic polling of the first agent 104.

In block 404, the first agent 104 retrieves the topology information 140 from the lookup service 110. As noted above, the topology information 140 can indicate a set of processing nodes in the computing cluster 100. The set of processing nodes can include the first processing node 102 and the second processing node 112, as well as any number of additional processing nodes, each with their own agents. The topology information 140 can include data related to the status of each processing node within the set of processing nodes, including whether a processing node is reachable, available, overloaded, offline, or any other condition that may be useful for determining whether to forward data 108 to a specific processing node within the set of processing nodes. The topology information 140 may also include the physical characteristics (e.g., hardware characteristics) of each processing node. For instance, the topology information 140 may indicate the type and size of each processor and memory unit located on each processing node.

In block 406, the first agent 104 provides the topology information to the data provider. The data provider can be configured to select a processing node, such as the first processing node 102, based on the topology information 140. After selecting the processing node, the data provider can transmit the data 108 to the selected processing node. If there is a problem with the selected processing node, the data provider can also be configured to select alternative processing nodes, such as the second processing node 112, based on the topology information 140. In some examples, the data provider may be configured to select multiple processing nodes to send some or all of the data 108 to simultaneously.

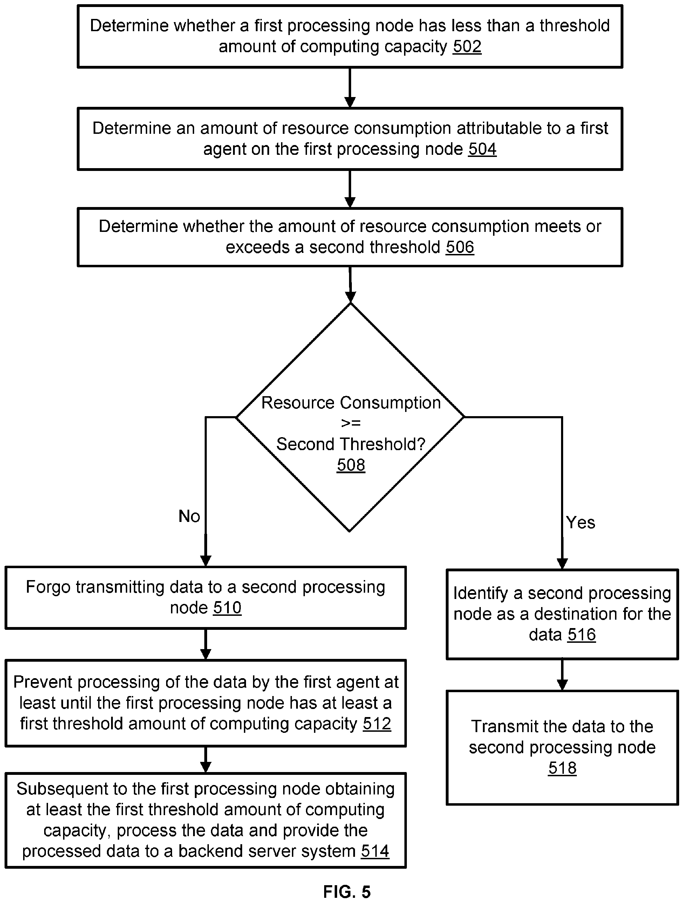

FIG. 5 is a flow chart of an example of a process determining whether to transmit data between processing nodes according to some aspects of the present disclosure. Other examples may include more operations, fewer operations, different operations, or a different order of the operations shown in FIG. 5. The operations of FIG. 5 will now be described with respect to the components of FIG. 1.

In block 502, the first agent 104 determines whether the first processing node 102 has less than a threshold amount of computing capacity 106. The first agent 104 may be configured to make such a determination periodically. In some examples, the first agent 104 may be configured to make the determination in response to a triggering condition. For example, a change in data velocity received by the first processing node may trigger the first agent 104 to perform the determination. Other triggering conditions may include receiving a communication from an agent of another processing node which is similarly querying the computing cluster 100 for processing nodes to forward data to.

In block 504, the first agent 104 determines an amount of resource consumption attributable to the first agent 104 on the first processing node 102. In some examples, the determination is made based on an instantaneous evaluation of the resource consumption attributable to the first agent 104. In other examples, the determination may account for periodic or historic trends in resource consumption attributable to the first agent 104.

In block 506, the first agent 104 determines whether the amount of resource consumption meets or exceeds a second threshold. The second threshold may be defined by a user or may be in part be defined by a status of the computing cluster 100. For instance, if the list 138 or topology information 140 indicates that a large number of processing nodes are online and available, the second threshold may be reduced. Additionally or alternatively, the second threshold may be defined in part based on the resource consumption of a second processing node 112 as provided by a second agent 114.

At decision 508, the first agent 104 determines whether to proceed to block 510 or instead to block 516. If the first agent 104 determines that the resource consumption meets or exceeds a second threshold as in block 506, the first agent proceeds to block 516. Alternatively, if the first agent 104 determines that the resource consumption is under the second threshold at block 506, the first agent proceeds to block 510.

In block 510, the first agent 104 forgoes transmitting data 108 to the second processing node 112. During this time, the first agent 104 may continue to receive data from the second agent 114 of the second processing node 112, from the lookup service, or from other processing nodes within the computing cluster 100.

In block 512, the first agent 104 prevents processing of the data 108 at least until the first processing node 102 has at least a first threshold amount of computing capacity 106. In some examples, the first agent 104 waits an additional time period after the resource consumption has fallen under the second threshold.

In block 514, the first agent 104 processes the data 108 and provides the processed data to a backend server system 118, subsequent to the first processing node 102 obtaining at least the first threshold amount of computing capacity 106. The backend server system 118 may located within or external to the computing cluster 100.

Returning to decision 508, if the first agent 104 determines that the resource consumption is under a second threshold as in block 506, the first agent 104 proceeds to block 516. In block 516, the first agent identifies a second processing node as a destination for the data 108. In some examples, the first agent 104 can identify multiple processing nodes a destination for the data. In determining the second processing node 112 as the destination for the data 108, the first agent 104 may acquire information related to the threshold amount of computing capacity of the one or more additional processing nodes from agents within the nodes themselves, e.g. from the second agent 114 of the second processing node 112. The first agent may receive the threshold amount of computing capacity information of the one or more additional processing nodes from the lookup service 110.

In some examples, the first agent 104 may store the address of the identified second processing as the destination for the data 108 in firm memory storage of the first processing node 102. For instance, in startup operations, the first agent 104 may immediately begin forwarding the data to the second processing node. On startup, the first agent 104 may retrieve the list 138 of available processing nodes to reidentify a second processing node as a destination for the data 108.

In the event that the first agent 104 cannot identify a single second processing node 112 capable of receiving the data 108 without the second processing node 112 similarly exceeding its own threshold amount of computing capacity 116, the first agent 104 may divide the data into sub-packages, and redetermine a group of two or more processing nodes as a destination for the data 108.

In block 518, the first agent 104 transmits the data 108 to the second processing node 112. The first agent 104 may transmit data 108 while also repeating the operations of blocks 502 through decision 508. For instance, the first agent 104 may transmit the data 108 to the second processing node 112 until the resource consumption of the first processing node 102 falls under the second threshold.

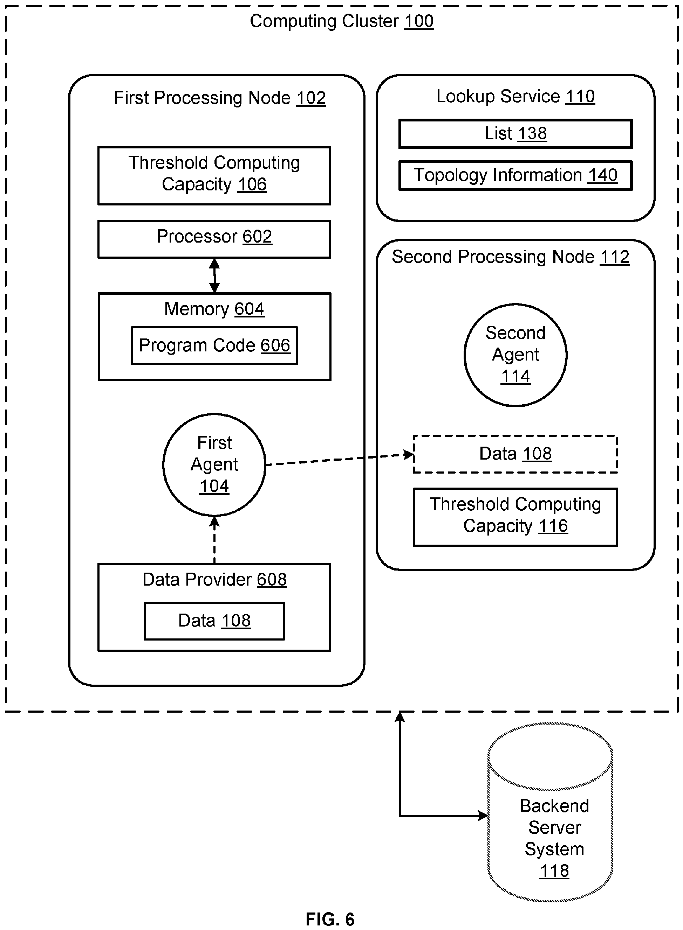

FIG. 6 shows a block diagram of an example of a system for balancing data processing loads between two or more processing nodes according to some aspects of the present disclosure. The system includes a computing cluster 100 with a first processing node 102, a second processing node 112, a lookup service 110, and a backend server system 118.

The first processing node 102 is hardware that includes one or more processors 602, one or more memories 604, and computer-readable program code instructions 606 that are executable by the processors 602.

The processor 602 can include one processor or multiple processors. Non-limiting examples of the processor 602 include a Field-Programmable Gate Array (FPGA), an application-specific integrated circuit (ASIC), a microprocessor, or a combination thereof. The processor 602 can execute computer-readable program code instructions 606 stored in the memory 604 to perform operations. In some examples, the computer-readable program code instructions 606 can include processor-specific instructions generated by a compiler or an interpreter from code written in any suitable computer-programming language, such as C, C++, C#, and Java. In some examples, the computer-readable program code instructions 606 can correspond to the first agent 104.

The memory 604 can include one memory or multiple memories. Memory 604 can be volatile or non-volatile (e.g., any type of memory device that retains stored information when powered off). Non-limiting examples of memory 604 include electrically erasable and programmable read-only memory (EEPROM), flash memory, or any other type of non-volatile memory. At least some of the memory 604 includes a non-transitory computer-readable medium from which the processor 602 can read computer-readable program code instructions 606. A computer-readable medium can include electronic, optical, magnetic, or other storage devices capable of providing the one or more processors 602 with computer-readable program code instructions 606 or other program code. Examples of a computer-readable medium can include magnetic disks, memory chips, ROM, random-access memory RAM, an ASIC, a configured processor, optical storage, or any other medium from which a computer processor can read instructions.

In some examples, the processor 602 can execute the computer-readable program code instructions 606 to perform any of the operations described herein. For example, the processor 602 can receive data 108 from a data provider (e.g., 120, 122) and determine whether the first processing node 102 has at least a threshold amount of computing capacity 106. In response to determining that the first processing node 102 has less than the threshold amount of computing capacity 106, the processor 602 can perform operations including receiving, from the lookup service 110, a list 138 of one or more processing nodes in the computing cluster 100 that have at least the threshold amount of computing capacity. The processor 602 can select, from the list 138, a second processing node 112 that has at least the threshold amount of computing capacity 116. Based on selecting the second processing node 112, the processor 602 may cause data 108 to be transmitted to the second agent 114 of the second processing node 112. The second agent 114 may be configured to process the data 108 and to provide the processed data to a backend server system 118.

It will be appreciated that each processing node of the one or more processing nodes, such as second processing node 112, may similarly include one or more processors, memories, and program codes for performing actions similar to the actions performed by the processor 602 within the first processing node 102. The processors and memories on each processing node may be similar or different with respect to the processors and memories of other processing nodes. For instance, some processing nodes may include FPGA processors while others include GPU processors. Similarly, some processing nodes may include similar or different memory storage devices.

In some aspects, load balancing and topology mapping between different agents and data providers may be performed according to one or more of the following examples. As used below, any reference to a series of examples is to be understood as a reference to each of those examples disjunctively (e.g., "Examples 1-4" is to be understood as "Examples 1, 2, 3, or 4").

Example #1: A non-transitory computer-readable medium comprising program code for a first agent, the first agent being executable by a processor of a first processing node of a computing cluster, the first agent being executable by the processor to perform operations including: receiving data from a data provider; determining whether the first processing node has at least a threshold amount of computing capacity; and in response to determining that the first processing node has less than the threshold amount of computing capacity: receiving, from a lookup service, a list of one or more processing nodes in the computing cluster that have at least the threshold amount of computing capacity; selecting, from the list, a second processing node that has at least the threshold amount of computing capacity; and based on selecting the second processing node, causing the data to be transmitted to a second agent of the second processing node, the second agent being configured to process the data and provide the processed data to a backend server system.

Example #2: The non-transitory computer-readable medium of Example #1, wherein the data provider is software executing on the first processing node, the software being separate from the first agent.

Example #3: The non-transitory computer-readable medium of Example #1, wherein the data provider is a client device that is remote from the first processing node.

Example #4: The non-transitory computer-readable medium of Example #3, wherein the data is telemetry data, and the client device is an edge device, the edge device being remote from the computing cluster.

Example #5: The non-transitory computer-readable medium of any of Examples #1-4, wherein the lookup service is remote from the first processing node, and wherein the lookup service is configured to: collect capacity information from a plurality of processing nodes in the computing cluster; receive, from the first agent, details about the data to be processed; generate the list of one or more processing nodes based on the details about the data and the capacity information; and transmit the list to the first agent.

Example #6: The non-transitory computer-readable medium of any of Examples #1-5, wherein the operations comprise: selecting the second processing node from the list based a capacity level of the second processing node and one or more other factors, the one or more other factors including a geographical location associated with the second processing node, a latency associated with the second processing node, a security policy associated with the second processing node, and/or a predefined priority associated with the second processing node.

Example #7: The non-transitory computer-readable medium of any of Examples #1-6, wherein the backend server system is separate from the computing cluster.

Example #8: The non-transitory computer-readable medium of any of Examples #1-5 or 7, wherein the operations further comprise: in response to determining that the first processing node has at least the threshold amount of computing capacity, processing the data and providing the processed data to the backend server system.

Example #9: The non-transitory computer-readable medium of any of Examples #1-7, wherein the threshold amount of computing capacity is a first threshold amount of computing capacity, and wherein the operations further comprise: in response to determining that the first processing node has less than the threshold amount of computing capacity: determining an amount of resource consumption attributable to the first agent on the first processing node; determining whether the amount of resource consumption meets or exceeds a second threshold; and in response to determining that the amount of resource consumption meets or exceeds the second threshold: identifying the second processing node as a destination for the data; and transmitting the data to the second processing node; or in response to determining that the amount of resource consumption attributable to the first agent is below the second threshold: forgoing transmitting the data to the second processing node; preventing processing of the data by the first agent at least until the first processing node has at least the first threshold amount of computing capacity; and subsequent to the first processing node obtaining at least the first threshold amount of computing capacity, processing the data and providing the processed data to the backend server system.

Example #10: The non-transitory computer-readable medium of any of Examples #1-7 or 9, wherein causing the data to be transmitted to the second processing node involves the first agent transmitting the data to the second agent.

Example #11: The non-transitory computer-readable medium of any of Examples #1-7 or 9-10, wherein causing the data to be transmitted to the second processing node involves the first agent transmitting a communication to the data provider, the communication indicating that the first processing node has less than the threshold amount of computing capacity and identifying the second processing node as an alternative processing node, the data provider being configured to transmit the data to the second processing node for processing based on the communication.

Example #12: The non-transitory computer-readable medium of any of Examples #1-11, wherein the operations further comprise, prior to receiving the data from the data provider: receiving a request from the data provider for topology information about the computing cluster; retrieving the topology information from the lookup service, the topology information indicating a set of processing nodes in the computing cluster, the set of processing nodes including the first processing node and the second processing node; and providing the topology information to the data provider, wherein the data provider is configured to select the first processing node based on the topology information and responsively provide the data to the first processing node.

Example #13: A method comprising: receiving, by a first agent of a first processing node of a computing cluster, data from a data provider; determining, by the first agent, whether the first processing node has at least a threshold amount of computing capacity; and in response to determining that the first processing node has less than the threshold amount of computing capacity: receiving, by the first agent and from a lookup service, a list of one or more processing nodes in the computing cluster that have at least the threshold amount of computing capacity; selecting, by the first agent and from the list, a second processing node that has at least the threshold amount of computing capacity; and based on selecting the second processing node, causing, by the first agent, the data to be transmitted to a second agent of the second processing node, the second agent being configured to process the data and provide the processed data to a backend server system.

Example #14: The method of Example #13, wherein the lookup service is remote from the first processing node, and wherein the lookup service is configured to: collect capacity information from a plurality of processing nodes in the computing cluster; receive, from the first agent, details about the data to be processed; generate the list of one or more processing nodes based on the details about the data and the capacity information; and transmit the list to the first agent.

Example #15: The method of any of Examples #13-14, further comprising selecting the second processing node from the list based a capacity level of the second processing node and one or more other factors, the one or more other factors including a geographical location associated with the second processing node, a latency associated with the second processing node, a security policy associated with the second processing node, and/or a predefined priority associated with the second processing node.

Example #16: The method of any of Examples #13-15, wherein the threshold amount of computing capacity is a first threshold amount of computing capacity, and further comprising: in response to determining that the first processing node has less than the threshold amount of computing capacity: determining an amount of resource consumption attributable to the first agent on the first processing node; determining whether the amount of resource consumption meets or exceeds a second threshold; and in response to determining that the amount of resource consumption meets or exceeds the second threshold: identifying the second processing node as a destination for the data; and transmitting the data to the second processing node.

Example #17: The method of any of Examples #13-16, wherein the data provider is a client device that is remote from the first processing node.

Example #18: The method of any of Examples #13-17, wherein causing the data to be transmitted to the second processing node involves the first agent transmitting a communication to the data provider, the communication indicating that the first processing node has less than the threshold amount of computing capacity and identifying the second processing node as an alternative processing node, the data provider being configured to transmit the data to the second processing node for processing based on the communication.

Example #19: The method of any of Examples #13-19, further comprising, prior to receiving the data from the data provider: receiving a request from the data provider for topology information about the computing cluster; retrieving the topology information from the lookup service, the topology information indicating a set of processing nodes in the computing cluster, the set of processing nodes including the first processing node and the second processing node; and providing the topology information to the data provider, wherein the data provider is configured to select the first processing node based on the topology information and responsively provide the data to the first processing node.

Example #20: A first processing node of a computing cluster, the first processing node comprising: a processor; and a memory including program code for a first agent, the first agent being executable by the processor to perform operations including: receiving data from a data provider; determining whether the first processing node has at least a threshold amount of computing capacity; and in response to determining that the first processing node has less than the threshold amount of computing capacity: receiving, from a lookup service, a list of one or more processing nodes in the computing cluster that have at least the threshold amount of computing capacity; selecting, from the list, a second processing node that has at least the threshold amount of computing capacity; and based on selecting the second processing node, causing the data to be transmitted to a second agent of the second processing node, the second agent being configured to process the data and provide the processed data to a backend server system.

Example #21: A computing cluster comprising: a first processing node including a first processor and a first agent; and a second processing node including a second processor and a second agent; wherein the first agent of the first processing node is configured to: determine whether the first processing node has at least a threshold amount of computing capacity; and in response to determining that the first processing node has less than the threshold amount of computing capacity: determine that the second processing node has at least the threshold amount of computing capacity; and based on determining that the second processing node has at least the threshold amount of computing capacity, cause data to be transmitted to the second agent of the second processing node; and wherein the second agent is configured to receive and process the data.

Example #22: The computing cluster of Example #21, wherein the first agent is further configured to: receive the data from a data provider, the data provider being software executing on the first processing node and separate from the first agent.

Example #23: The computing cluster of Example #21, wherein the first agent is further configured to receive the data from a data provider that is a client device remote from the first processing node.

Example #24: The computing cluster of Example #23, wherein the data is telemetry data, and the client device is an edge device in an edge cluster, the edge cluster being remote from the computing cluster.

Example #25: The computing cluster of any of Examples #21-24, further comprising a lookup service that is remote from the first processing node, wherein the lookup service is configured to: collect capacity information from a plurality of processing nodes in the computing cluster; receive, from the first agent, details about the data to be processed; generate a list of one or more processing nodes based on the details about the data and the capacity information; and transmit the list to the first agent, the first agent being configured to select the second processing node from the list.

Example #26: The computing cluster of any of Examples #21-25, wherein the first agent is configured to select the second processing node from the list based a capacity level of the second processing node and one or more other factors, the one or more other factors including a geographical location associated with the second processing node, a latency associated with the second processing node, a security policy associated with the second processing node, and/or a predefined priority associated with the second processing node.

Example #27: The computing cluster of any of Example #21-25, wherein the first agent is configured to: in response to determining that the first processing node has at least the threshold amount of computing capacity, process the data.

Example #28: The computing cluster of any of Examples #21-27, wherein the threshold amount of computing capacity is a first threshold, and wherein the first agent is configured to: in response to determining that the first processing node has less than the threshold amount of computing capacity: determine an amount of resource consumption attributable to the first agent on the first processing node; determine whether the amount of resource consumption meets or exceeds a second threshold; and in response to determining that the amount of resource consumption meets or exceeds the second threshold: identify the second processing node as a destination for the data; and transmit the data to the second processing node.

Example #29: The computing cluster of any of Examples #21-27, wherein the threshold amount of computing capacity is a first threshold amount of computing capacity, and wherein the first agent is configured to: in response to determining that the first processing node has less than the threshold amount of computing capacity: determine an amount of resource consumption attributable to the first agent on the first processing node; determine whether the amount of resource consumption meets or exceeds a second threshold; and in response to determining that the amount of resource consumption attributable to the first agent is below the second threshold: forgo transmitting the data to the second processing node; prevent processing of the data by the first agent at least until the first processing node has at least the first threshold amount of computing capacity; and subsequent to the first processing node obtaining at least the first threshold amount of computing capacity, process the data.

Example #30: The computing cluster of any of Examples #21-26 or 28-29, wherein causing the data to be transmitted to the second processing node involves the first agent transmitting a communication to a data provider, the data provider being a provider of the data, the communication indicating that the first processing node has less than the threshold amount of computing capacity and identifying the second processing node as an alternative processing node, and the data provider being configured to transmit the data to the second processing node for processing based on the communication.

Example #31: The computing cluster of any of Examples #21-30, wherein the first agent is further configured to, prior to receiving the data from a data provider: receive a request from the data provider for topology information about the computing cluster; retrieve the topology information, the topology information indicating a set of processing nodes in the computing cluster, the set of processing nodes including the first processing node and the second processing node; and provide the topology information to the data provider, wherein the data provider is configured to select the first processing node based on the topology information and responsively provide the data to the first processing node.

Example #32: The computing cluster of any of Examples #21-26 or 28-31, wherein the second agent is configured to, in response to receiving a request to process the data from the first processing node: determine whether the second processing node has at least the threshold amount of computing capacity; and in response to determining that the second processing node has at least the threshold amount of computing capacity, process the data; or in response to determining that the second processing node has less than the threshold amount of computing capacity, transmit a communication to the first agent rejecting the request, the first agent being configured to select an alternative node to process the data in response to receiving the communication, the alternative node being a processing node in the computing cluster that is different from the second processing node.

Example #33: A computing device comprising: a processor; and a memory including program code that is executable by the processor for causing the processor to perform operations including: transmitting data to a first processing node of a computing cluster; after transmitting the data to the first processing node, receiving a communication from the first processing node indicating that the first processing node has less than a threshold amount of computing capacity; selecting an alternative processing node from among one or more alternative processing nodes in the computing cluster; and transmitting the data to the alternative processing node for processing.

Example #34: The computing device of Example #33, wherein the communication indicates the one or more alternative processing nodes usable to process the data, the one or more alternative processing nodes being selected by the first processing node from among a plurality of processing nodes in the computing cluster based on capacity information associated with the plurality of processing nodes.

Example #35: The computing device of any of Examples 33-34, wherein the operations further comprise transmitting a request to the first processing node for topology information about the computing cluster; receiving the topology information from the first processing node in reply to the request; and selecting the alternative processing node based on the topology information.

Example #36: A system comprising: means for receiving data from a data provider; means for determining whether a first processing node in a computing cluster has at least a threshold amount of computing capacity; and in response to determining that the first processing node has less than the threshold amount of computing capacity: means for receiving a list of one or more processing nodes in the computing cluster that have at least the threshold amount of computing capacity; means for selecting, from the list, a second processing node that has at least the threshold amount of computing capacity; and means for, based on selecting the second processing node, causing the data to be transmitted to a second agent of the second processing node, the second agent being configured to process the data and provide the processed data to a backend server system.

The foregoing description of certain examples, including illustrated examples, has been presented only for the purpose of illustration and description and is not intended to be exhaustive or to limit the disclosure to the precise forms disclosed. Numerous modifications, adaptations, and uses thereof will be apparent to those skilled in the art without departing from the scope of the disclosure. For instance, any example described herein can be combined with any other examples to yield further examples.

## Claims

1. A method comprising:
receiving, by a first agent of a first processing node of a computing cluster, data from a data provider;
determining, by the first agent, whether the first processing node has at least a threshold amount of computing capacity; and
in response to determining that the first processing node has less than the threshold amount of computing capacity:
receiving, by the first agent and from a lookup service, a list of one or more processing nodes in the computing cluster that have at least the threshold amount of computing capacity;
selecting, by the first agent and from the list, a second processing node that has at least the threshold amount of computing capacity; and
based on selecting the second processing node, causing, by the first agent, the data to be transmitted to a second agent of the second processing node, the second agent being configured to process the data and provide the processed data to a backend server system.

2. The method of claim 1, wherein the lookup service is remote from the first processing node, and wherein the lookup service is configured to:
collect capacity information from a plurality of processing nodes in the computing cluster;
receive, from the first agent, details about the data to be processed;
generate the list of one or more processing nodes based on the details about the data and the capacity information; and
transmit the list to the first agent.

3. The method of claim 1, further comprising selecting the second processing node from the list based on a capacity level of the second processing node and one or more other factors, the one or more other factors including a geographical location associated with the second processing node, a latency associated with the second processing node, a security policy associated with the second processing node, and/or a predefined priority associated with the second processing node.

4. The method of claim 1, wherein the threshold amount of computing capacity is a first threshold amount of computing capacity, and further comprising:
in response to determining that the first processing node has less than the threshold amount of computing capacity:
determining an amount of resource consumption attributable to the first agent on the first processing node;
determining whether the amount of resource consumption meets or exceeds a second threshold; and
in response to determining that the amount of resource consumption meets or exceeds the second threshold:
identifying the second processing node as a destination for the data; and
transmitting the data to the second processing node; or
in response to determining that the amount of resource consumption attributable to the first agent is below the second threshold:
forgoing transmitting the data to the second processing node;
preventing processing of the data by the first agent at least until the first processing node has at least the first threshold amount of computing capacity; and
subsequent to the first processing node obtaining at least the first threshold amount of computing capacity, processing the data and providing the processed data to the backend server system.

5. The method of claim 1, further comprising: in response to determining that the first processing node has at least the threshold amount of computing capacity, processing the data and providing the processed data to the backend server system.

6. The method of claim 1, wherein causing the data to be transmitted to the second processing node involves the first agent transmitting the data to the second agent.

7. The method of claim 1, wherein the data provider is a client device that is remote from the first processing node.

8. The method of claim 7, wherein the data is telemetry data, and the client device is an edge device, the edge device being remote from the computing cluster.

9. The method of claim 1, wherein causing the data to be transmitted to the second processing node includes the first agent transmitting a communication to the data provider, the communication indicating that the first processing node has less than the threshold amount of computing capacity and identifying the second processing node as an alternative processing node, the data provider being configured to transmit the data to the second processing node for processing based on the communication.

10. The method of claim 1, further comprising, prior to receiving the data from the data provider:
receiving a request from the data provider for topology information about the computing cluster;
retrieving the topology information from the lookup service, the topology information indicating a set of processing nodes in the computing cluster, the set of processing nodes including the first processing node and the second processing node; and
providing the topology information to the data provider, wherein the data provider is configured to select the first processing node based on the topology information and responsively provide the data to the first processing node.

11. A non-transitory computer-readable medium comprising program code for a first agent, the first agent being executable by a processor of a first processing node of a computing cluster, the first agent being executable by the processor to perform the method of any of claims 1 to 10.

12. The non-transitory computer-readable medium of claim 11, wherein the data provider is software executing on the first processing node, the software being separate from the first agent.

13. The non-transitory computer-readable medium of claim 11, wherein the backend server system is separate from the computing cluster.

14. The non-transitory computer-readable medium of claim 11, wherein causing the data to be transmitted to the second processing node includes the first agent transmitting the data to the second agent.

15. A first processing node of a computing cluster, the first processing node comprising:
a processor; and
a memory including program code for a first agent, the first agent being executable by the processor to perform the method of any of claims 1 to 10.
